(19)

**Europäisches Patentamt**
**European Patent Office**
**Office européen des brevets**

(11) **EP 3 301 297 A1**

(12) **EUROPEAN PATENT APPLICATION**

(43) Date of publication:
**04.04.2018 Bulletin 2018/14**

(51) Int Cl.:
**F03D 17/00** *(2016.01)*　　**F03D 80/50** *(2016.01)*

(21) Application number: **17181331.4**

(22) Date of filing: **14.07.2017**

<table>
<tr><td>

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **30.09.2016　DE 102016219096**

</td><td>

(71) Applicant: **Siemens Aktiengesellschaft
80333 München (DE)**

(72) Inventors:
- **Egedal, Per
  7400 Herning (DK)**
- **Enevoldsen, Peder Bay
  7100 Vejle (DK)**

</td></tr>
</table>

(54) **DAMAGE DETECTION OF A ROTOR BLADE OF A WIND TURBINE**

(57)　A method is proposed for detecting damage to at least one rotor blade (120,...,122) of a wind turbine, comprising the following steps,
- monitoring during rotation of the at least one rotor blade (120,...,122) at least one internal air condition (145,..., 147; 270,..., 272) inside a blade root of the at least one rotor blade (120,...,122), wherein
- the internal air condition (145,..., 147; 270,...,272) is affected by a centrifugal effect pumping the air inside the at least one rotor blade (120,...,122) from a root end towards a tip end and out of at least one hole (125) of the at least one rotor blade (120,...,122),

- detecting damage (130) to the at least one rotor blade (120,...,122) based on the at least one monitored internal air condition (145,...,147; 270,...,272).

Further, a wind turbine and a device as well as a computer program product and a computer readable medium are suggested for performing said method.

FIG 1

EP 3 301 297 A1

## Description

The invention relates to a method and a wind turbine for detecting damage to at least one rotor blade of a wind turbine.

Cracks being present on a surface or skin of a rotor blade of a wind turbine may lead to severe damage of the rotor blade - in worst case a total loss of the rotor blade may be the consequence.

Even blocked drain holes usually being part of rotor blades, preferably located at the tip end of the rotor blade, may cause damage to a rotor blade, e.g., if hit by a lightning strike.

Detection of such kind of damages may be based on a visible inspection.

Another approach for damage detection may be based on active frequency response solutions.

These known solutions for damage detection do not provide adequate measurement results and may indicate faulty damage detection. As a further disadvantage, many solutions require a hollow space in the wind turbine to be more or less a sealed (air-tight) space to provide accurate data points to be processed further on. That requirement is a difficult prerequisite as, e.g., blade material per se is not complete air-tight and access-ways to the rotor blade like manholes or wiring holes (mainly located at a root section of a rotor blade) may also result in unwanted openings. As another drawback, drain holes also makes it difficult to meet the requirement of a "sealed space".

The object is thus to overcome the aforementioned disadvantages and in particular to provide an improved approach for optimizing damage detection of a rotor blade.

This problem is solved according to the features of the independent claims. Further embodiments result from the depending claims.

In order to overcome this problem, a method is provided for detecting damage to at least one rotor blade of a wind turbine, comprising

- monitoring during rotation of the at least one rotor blade at least one internal air condition inside a blade root of the at least one rotor blade, wherein

    - the internal air condition is affected by a centrifugal effect pumping the air inside the at least one rotor blade from a root end towards a tip end and out of at least one hole of the at least one rotor blade,

- detecting damage to the at least one rotor blade based on the at least one monitored internal air condition.

The proposed solution is based on the centrifugal pump effect being effective inside a hollow space of a rotor blade caused by a rotational movement of the rotor blade during operation of the wind turbine. Due to the centrifugal effect air is pumped inside the hollow space of the rotor blade from a root end (also mentioned as "blade root" or "root section") to a tip end of the rotor blade and out of at least one hole being part of the rotor blade.

The at least one hole may be at least one drain hole already being part of the rotor blade.

Alternatively or in addition to that, the at least one hole may be implemented in a rotor blade for the specific purpose of enabling the proposed solution.

According to the proposed solution, the at least one hole may be located at or near by the tip end of the rotor blade.

Internal air condition may be any parameter or combination of parameters characterizing the air inside the rotor blade like, e.g., "air pressure" or "air flow".

"Monitoring" may be measuring and/or determining and/or processing the at least one parameter characterizing the air by use of, e.g., suitable measurement means installed inside the hollow space of the rotor blade, in particular installed inside the blade root.

Measurement means may be means for capturing or measuring the parameter or a combination of parameters characterizing the air like, e.g., for measuring an air pressure (e.g. by using a differential pressure gauge) or a speed of the air flow (e.g. by using a flow meter or ultra sonic wind speed sensor).

As an example, the air pressure inside the root section of a non rotating rotor blade is equal or almost equal to an ambient air pressure.

Ambient air pressure is an air pressure measured outside the rotor blade like, e.g., on top of the nacelle or in front of a spinner of a rotor hub.

Pumping air inside the hollow space of the rotor blade towards its tip end causes a decrease of the air pressure inside the root section (i.e. educing a kind of vacuum inside the root section) with the consequence of an air pressure difference between the ambient air pressure and the air pressure inside the rotor blade root. Thereby, the air pressure difference may vary dependent on current wind speed, rotor speed and air density.

Assuming an ambient air pressure value $P_0$, an air pressure value $P_{root}$ inside the inner space of the blade root of the rotating rotor blade may be calculated by

$$P_{root} = P_0 - \frac{\rho \omega^2 r^2}{2}$$

wherein

     $\rho$ is the density of air,
     $\omega$ is the angular velocity of the rotor blade, and
     $r$ is the length of the rotor blade.

In case of a damage of the skin of the rotor blade like, e.g., the presence of a crack or hole, "false air" will be sucked into the inner space of the rotor blade resulting in an increase of the air pressure $P_{root}$ inside the blade root towards or near to the ambient air pressure $P_0$ which further results in a drop of the air pressure difference between the ambient air pressure value $P_0$ and the internal air pressure value $P_{root}$ inside the blade root which will be monitored according to the solution suggested.

The proposed solution further allows detection of blocked drain holes. The air pressure difference as well as the air flow in a rotor blade with a blocked drain hole is different compared to the air pressure difference or air flow in a rotor blade with an unblocked, i.e., free drain hole.

One aspect of the solution suggested is detecting damages like cracks in hollow wind turbine blades by monitoring at least one internal air condition and/or changes of the at least one internal air condition inside the root section of the rotating rotor blade. Advantageously the proposed solution may be implemented in wind turbines with the current requirement of a visual inspection. The proposed solution will reduce down time, safe service hours and avoid fatal wind turbine damages due to a defective rotor blade. These factors allow a cost effective and thus economic operation of one or more wind turbines.

As a further advantage, damages may be identified regardless of their position in relation to the surface of the rotor blade which is not possible by the aforementioned frequency monitoring detecting cracks only in the edge direction of the rotor blade.

In an embodiment, the damage is detected when the at least one monitored internal air condition is different to a predetermined internal air condition.

In another embodiment, the method comprises

- monitoring at least one further internal air condition inside the blade root of at least one further rotor blade,
- comparing the at least one monitored internal air condition with the at least one further monitored internal air condition,
- detecting the damage to the at least one rotor blade based on the comparison.

Advantageously an average internal air condition may be derived based on the monitored further internal air condition inside the blade root of a number of further rotor blades. The average internal air condition or any other information representing the average internal air condition will be compared with the at least one monitored internal air condition. Using the average internal air condition results in a more accurate damage detection of a wind turbine.

In a further embodiment, the damage is detected when a difference between the compared internal air conditions is beyond a predetermined difference.

In a next embodiment, the method comprises the steps of

- determining an internal air pressure value representing an internal air pressure inside the blade root of the at least one rotor blade,
- determining an ambient air pressure value representing an ambient air pressure outside the at least one rotor blade,
- determining an air pressure difference value between the internal air pressure value and the ambient air pressure value,
- detecting the damage to the at least one rotor blade based on the determined air pressure difference value.

The internal air pressure inside the blade root of the rotor blade is one exemplary parameter representing the internal air condition inside the blade root of the rotor blade.

It is also an embodiment that the damage is detected when the determined air pressure difference value is equal or below a predetermined threshold value.

Pursuant to another embodiment, the method comprises the steps of

- determining at least one further internal air pressure value representing the air pressure inside a blade root of at least one further rotor blade,
- determining at least on further air pressure difference value between the at least one further internal air pressure value and the ambient air pressure value,
- comparing the air pressure difference value with the at least one further air pressure difference value,
- detecting the damage to the at least one rotor blade based on the comparison.

Advantageously an average internal air pressure difference value may be derived based on a number (e.g. two) of air pressure difference values of a number (e.g. two) of further rotor blades. The average internal air pressure difference value may be compared with the air pressure difference value of the at least one rotor blade.

According to an embodiment, the damage is detected when a difference between the compared air pressure difference values is equal or beyond ("greater than", "higher than" or "exceeding") a predetermined threshold value.

In other words, a damage to the rotor blade is detected when the air pressure difference value of that rotor blade is

- too low compared to (or lower than) the air pressure difference values of the other rotor blades or
- too low compared to (or lower than) a predetermined threshold value.

According to another embodiment, the method comprises the steps

- determining an internal air flow value inside the blade root of the at least one rotor blade,
- detecting the damage to the at least one rotor blade based on the determined air flow value.

The internal air flow inside the blade root of the rotor blade is one further possible parameter representing the internal air condition inside the blade root of the rotor blade.

The internal air flow value may be determined instead of or in addition to (in combination with) the determined internal air pressure value for detecting damage to the rotor blade.

Due to the centrifugal pump effect, the air flow inside the hollow space and thus inside the rotor blade root will vary as a function of the rotor speed but will be equal or almost equal inside all (e.g. three) rotor blades.

In case of the presence of a crack in the rotor blade "false air" will be sucked into the inner space of the rotor blade which results in a higher air flow inside the rotor blade. The flow will be higher the more "false air" is sucked in.

Thereby the air pressure within the rotor blade root will increase to or almost near to the ambient air pressure.

In yet another embodiment, the method comprises comparing the internal air flow value with a predetermined air flow value,
wherein the damage is detected when a difference between the compared air flow values is equal or beyond a predetermined threshold value.

The predetermined air flow value may represent the air flow being usually present inside the rotor blade without any damage.

The predetermined air flow may vary dependent on the current rotor speed.

According to a next embodiment the method comprises

- determining at least one further internal air flow value inside a blade root of at least one further rotor blade,
- comparing the internal air flow value with the at least one further internal air flow value,
- detecting the damage to the at least one rotor blade based on the comparison.

Advantageously an average internal air flow value may be derived based on a number (e.g. two) of air flow values of a number (e.g. two) of further rotor blades. The average internal air flow value may be compared with the air flow value of the at least one rotor blade.

Pursuant to yet an embodiment, the damage is detected when a difference between the compared internal air flow value and the at least one further internal air flow value is equal or beyond ("greater than", "higher than" or "exceeding") a predetermined threshold value.

In other words, a damage to the rotor blade is detected when the air flow value of that rotor blade is

- too high compared to (higher than) the air flow values of the other rotor blades or
- too high compared to (higher than) a predetermined threshold value.

According to a further embodiment, the internal air flow value is a wind speed value.

The problem stated above is also solved by a wind turbine comprising

- at least one rotor blade, and
- a processing unit that is arranged for

  - monitoring during rotation of the at least one rotor blade an internal air condition inside a blade root of the at least one rotor blade, wherein

    - the internal air condition is affected by a centrifugal effect pumping the air inside the at least one rotor blade from a root end towards a tip end and out of at least one hole of the at least one rotor blade,

  - detecting damage to the at least one rotor blade based on the monitored internal air condition.

The problem stated above is also solved by a device comprising and/or being associated with a processing unit and/or hard-wired circuit and/or a logic device that is arranged such that the method as described herein is executable thereon.

Said processing unit may comprise at least one of the following: a processor, a microcontroller, a hard-wired circuit, an ASIC, an FPGA, a logic device.

The solution provided herein further comprises a computer program product directly loadable into a memory of a digital computer, comprising software code portions for performing the steps of the method as described herein.

In addition, the problem stated above is solved by a computer-readable medium, e.g., storage of any kind, having computer-executable instructions adapted to cause a computer system to perform the method as described herein.

Embodiments of the invention are shown and illustrated in the following figures:

Fig.1    shows a schematically front view of a wind turbine including a functional extract of an exemplary embodiment of the inventive damage detection based on air pressure measurement,

Fig.2    shows a schematically front view of a wind turbine including a functional extract of an exemplary embodiment of the inventive damage detection based on air flow measurement.

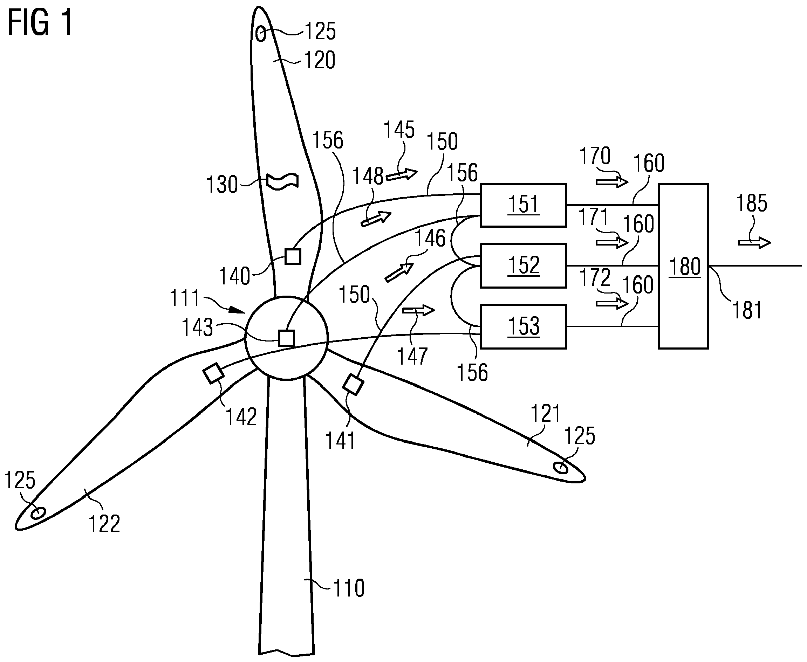

Fig.1 shows a schematically front view of an exemplary embodiment of a wind turbine 100 comprising a nacelle (not shown) being rotatable mounted on top of a tower 110. A rotor 111 is attached to an upwind side of the nacelle. The rotor 111 includes a central rotor hub and a plurality of rotor blades 120,...,122 mounted to and extending radially from the rotor hub defining a rotor plane. Each rotor blade 120,...,122 comprises a drain hole 125 at the tip end side.

According to an exemplary embodiment an air pressure sensor device 140,...,142 is located inside a hollow space of a root section ("blade root") of each rotor blade 120,...,122. Each air pressure sensor device 140,...,142 is measuring and determining the air pressure inside each root section. A resulting air pressure information like, e.g., an air pressure value 145,...,147 is provided via a respective connection line 150 to a respective determination unit 151,...,153.

The resulting air pressure information 145,...,147 may be provided by use of any kind of communication system based on wire line or wireless data transmission technology.

Further, an air pressure sensor device 143 is located at a spinner of the rotor 111 measuring an ambient air pressure at a front side of the spinner. A resulting ambient air pressure information like, e.g. an ambient air pressure value 148 is provided via connection lines 156 to each determination unit 151,...,153.

In the exemplary scenario as shown in Fig.1 each determination unit 151,...,153 is representing a differential air pressure gauge, each determining a difference between the provided air pressure information 145,...,147 and the provided ambient air pressure information 148. An information 170,...,172 representing the respective air pressure difference is forwarded by each determination unit 151,...,153 via a respective connection line 160 to a monitoring unit 180.

Different monitoring concepts may be implemented by the monitoring unit 180.

For further explanation, the following exemplary scenario should be assumed.

Due to rotation of the rotor blades 120,...,122 and based on the aforementioned centrifugal pump effect air inside the hollow space of each rotor blade 120,...,122 is pumped from the root end to the tip end of each rotor blade 120,...,122 and out of the respective drain hole 125. As a rotor blade 120,...,122 is not air-tight per se, a part of the air pumped out via the drain hole 125 will be replaced by air being permanently sucked inside the hollow space of each rotor blade 120,...,122. Thereby, due to nonstructural characteristic of a rotor blade, air will be mainly sucked through openings or holes at the root section of the rotor blade.

This results in a air flow inside the hollow space of each rotor blade 120,...,122 from the root section towards the drain hole 125 which finally results in a air pressure difference between the air pressure inside the root section of each rotor blade 120,...,122 and the ambient air pressure.

A crack 130 is exemplarily located at the rotor blade 120. As a consequence, additional air (also mentioned as "false air") is sucked through the crack inside the hollow space of the rotor blade 120. Due to false air is entering the inner space of the rotor blade 120 the air pressure difference between the air pressure inside the root section of the rotor blade 120 and the ambient air pressure will decrease.

According to a first possible embodiment, the respective air pressure difference information or value 170,...,172 provided by each determination unit 151,...,153 is monitored by the monitoring unit 180 thereby comparing each air pressure difference value 170,...,172 with a predetermined threshold value. Thereby, if one of the monitored air pressure difference values 170,...,172 drops below the threshold value an alarm signal 185 is generated by the monitoring unit 180 being provided at an output 181 of the monitoring unit 180 indicating a detected damage at the respective rotor blade 120,...,121. In the exemplary scenario of Fig.1, due the aforementioned decrease of the air pressure difference inside the root section of the rotor blade 120 the alarm signal 185 is indicating the crack 130 detected at the rotor blade 120.

According to a further possible embodiment, the provided air pressure difference values 170,...,172 are compared by the monitoring unit 180. As an example, the provided air pressure difference value 170 provided by the determination unit 151 is compared with an average air pressure difference value based on the air pressure difference values 171, 172 provided by the other determination units 152, 153. Thereby, if the result of the comparison, i.e., the difference between the air pressure difference value 170 and the average air pressure difference value is beyond a predetermined threshold value the signal 175 is generated indicating a detected damage at a rotor blade.

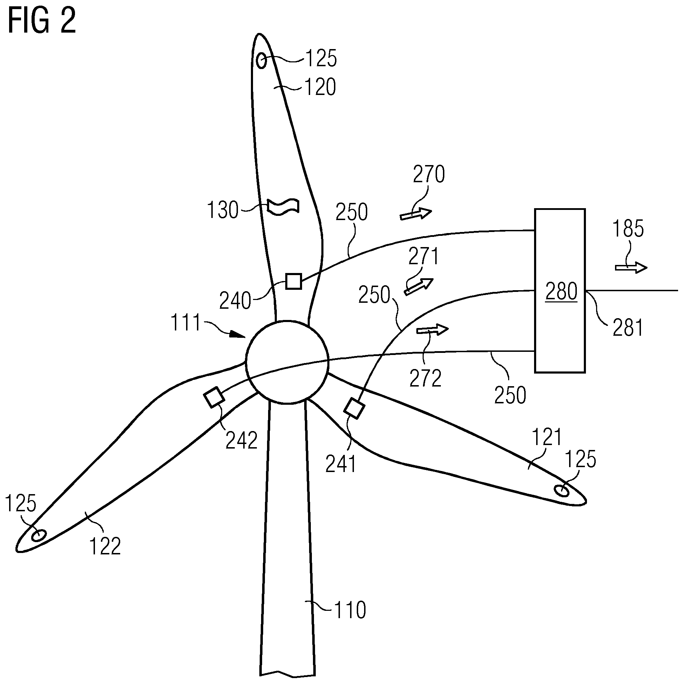

Fig.2 illustrates a schematically front view of a wind turbine including a functional extract of an alternative embodiment of the proposed damage detection, based on air flow measurement.

According to one further aspect of the proposed solution, by monitoring changes in the air flow inside the blade root of each rotor blade by the monitoring unit, one of more cracks in the shell or surface of the respective rotor blade may be detected.

The exemplary scenario as shown in Fig.2 is mainly based on the scenario of Fig.1, wherein equal reference numbers are used for elements or units having equal or similar functionalities, so reference is made respectively to the relevant elements or units in Fig.1.

Instead of the air pressure sensor devices 140,...,142 used in Fig.1 an air flow measurement device 240,...,242 is placed inside the hollow space of the root section of each rotor blade 120,...,122. Each air flow measurement device 240,...,242 is measuring characteristic of the air flow inside each root section of the respective rotor blade 120,...,122.

The characteristic of the air flow may be measured by using, e.g., flow meters or ultra sonic wind speed sensors located inside the hollow space of the rotor blade.

A respective air flow information or value 270,...,272 representing the respective measured characteristic of the air flow is provided via a respective connection line 250 to a monitoring unit 280 monitoring and processing the provided values 270,..., 272.

According to a possible embodiment the respective air flow information or value 270,...,272 provided by each air flow measurement device 240,...,242 is monitored by the monitoring unit 280 thereby comparing each air flow value 270,...,272 with a predetermined threshold value. If one of the monitored air flow values 270,...,272 drops below the threshold value the alarm signal 185 is generated by the monitoring unit 280 being provided at the output 281 of the monitoring unit 280 indicating a detected damage at the respective rotor blade 120,...,121.

According to a further possible embodiment, the air flow value (e.g. 270) provided by one air flow measurement device (e.g. 240) is compared with an average air flow value based on the air flow values (e.g. 271, 272) provided by the other air flow measurement devices 241,242. Thereby, if the result of the comparison, i.e. the difference between, e.g., the air flow value 270 an the average air flow value is beyond a predetermined threshold value the signal 185 is generated indicating a detected damage at a rotor blade 120.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements. The mention of a "unit" or a "module" does not preclude the use of more than one unit or module.

**Claims**

1. Method for detecting damage to at least one rotor blade (120,...,122) of a wind turbine, comprising the following steps,

 - monitoring during rotation of the at least one rotor blade (120,...,122) at least one internal air condition (145,...,147; 270,...,272) inside a blade root of the at least one rotor blade (120,...,122), wherein

  - the internal air condition (145,...,147;270,...,272) is affected by a centrifugal effect pumping the air inside the at least one rotor blade (120,...,122) from a root end towards a tip end and out of at least one hole (125) of the at least one rotor blade (120,...,122),

 - detecting damage (130) to the at least one rotor blade (120,...,122) based on the at least one monitored internal air condition (145,...,147;270,...,272).

2. The method according to claim 1, wherein the damage is detected when the at least one monitored internal air condition (145,...,147;270,...,272) is different to a predetermined internal air condition.

3. The method according to claim 1 or 2, comprising

 - monitoring at least one further internal air condition (145,...,147;270,...,272) inside the blade root of at least one further rotor blade (120,...,122),
 - comparing the at least one monitored internal air condition (145,...,147;270,...,272) with the at least on further monitored internal air condition (145,...,147;270,...,272),
 - detecting the damage (130) to the at least one rotor blade (120,...,122) based on the comparison.

4. The method according to claim 3, wherein the damage (130) is detected when a difference between the compared internal air conditions is equal or beyond a predetermined difference.

5. The method according to any of the preceding claims, comprising

 - determining an internal air pressure value (145,...,147) representing an internal air pressure inside the blade root of the at least one rotor blade (120,...,122),
 - determining an ambient air pressure value (148) representing an ambient air pressure outside the at least one rotor blade (120,...,122),
 - determining an air pressure difference value (170,...,172) between the internal air pressure value (145,...,147) and the ambient air pressure value (148),
 - detecting the damage (130) to the at least one rotor blade (120,...,122) based on the determined air pressure difference value (170,...,172).

6. The method according to claim 5, wherein the damage is detected when the determined air pressure difference value (170,...,172) is equal or below a predetermined threshold value.

**7.** The method according to claim 5 or 6, comprising

- determining at least one further internal air pressure value (145,...,147) representing the air pressure inside a blade root of at least one further rotor blade (120,...,122),
- determining at least on further air pressure difference value (170,...,172) between the at least one further internal air pressure value (145,...,147) and the ambient air pressure value (148),
- comparing the air pressure difference value with the at least one further air pressure difference value,
- detecting the damage (130) to the at least one rotor blade based on the comparison.

**8.** The method according to claim 7, wherein the damage is detected when a difference between the compared air pressure difference values (145,...,147) is equal or beyond a predetermined threshold value.

**9.** The method according to any of the preceding claims, comprising

- determining an internal air flow value (270,...,272) inside the blade root of the at least one rotor blade (120,...,122),
- detecting the damage (130) to the at least one rotor blade based on the determined air flow value (270,...,272).

**10.** The method according to claim 9, comprising comparing the internal air flow value (270,...,272) with a predetermined air flow value, wherein the damage (130) is detected when a difference between the compared air flow values (270,...,272) is equal or beyond a predetermined threshold value.

**11.** The method according to claim 9 or 10, comprising

- determining at least one further internal air flow value (270,...,272) inside a blade root of at least one further rotor blade,
- comparing the internal air flow value (270,...,272) with the at least one further internal air flow value (270,...,272),
- detecting the damage (130) to the at least one rotor blade (120,...,122) based on the comparison.

**12.** The method according to claim 11, wherein the damage is detected when a difference between the compared internal air flow value and the at least one further internal air flow value is equal or beyond a predetermined threshold value.

**13.** The method according to any of the claims 9 to 12, wherein the internal air flow value is a wind speed value.

**14.** A wind turbine, comprising

- at least one rotor blade (120,...,122), and
- a processing unit that is arranged for

- monitoring during rotation of the at least one rotor blade (120,...,122) an internal air condition (145,...,147;270,...,272) inside a blade root of the at least one rotor blade (120,...,122), wherein

- the internal air condition (145,...,147;270,...,272) is affected by a centrifugal effect pumping the air inside the at least one rotor blade from a root end towards a tip end and out of at least one hole (125) of the at least one rotor blade (120,...,122),

- detecting damage (130) to the at least one rotor blade (120,...,122) based on the monitored internal air condition (145,...,147;270,...,272).

FIG 1

EP 3 301 297 A1

FIG 2

Europäisches
Patentamt

European
Patent Office

Office européen
des brevets

# EUROPEAN SEARCH REPORT

Application Number

EP 17 18 1331

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2013/129511 A1 (KAYAMA HIROYUKI [JP] ET AL) 23 May 2013 (2013-05-23)<br>* figures 2, 3 *<br>* paragraphs [0047] - [0055], [0064], [0073], [0087] * | 1-6,14<br><br>7,8 | INV.<br>F03D17/00<br>F03D80/50 |
| X<br>A | EP 3 048 296 A1 (SENVION GMBH [DE]) 27 July 2016 (2016-07-27)<br>* figures 2, 3 *<br>* paragraph [0062] * | 1-4,9-14<br><br>7,8 | |
| X<br>A | US 2011/103953 A1 (HAANS WOUTER [NL] ET AL) 5 May 2011 (2011-05-05)<br>* figure 2 *<br>* paragraph [0044] * | 1-4,9-14<br><br>7,8 | |
| X<br><br><br>A | EP 2 884 099 A1 (MITSUBISHI HEAVY IND LTD [JP]; MHI VESTAS OFFSHORE WIND AS [DK]) 17 June 2015 (2015-06-17)<br>* figures 16, 17 *<br>* paragraphs [0033], [0163] - [0166] * | 1-6,14<br><br><br>7,8 | |

TECHNICAL FIELDS
SEARCHED (IPC)

F03D

The present search report has been drawn up for all claims

| Place of search | Date of completion of the search | Examiner |
|---|---|---|
| The Hague | 1 February 2018 | Altmann, Thomas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 17 18 1331

This annex lists the patent family members relating to the patent documents cited in the above-mentioned European search report.
The members are as contained in the European Patent Office EDP file on
The European Patent Office is in no way liable for these particulars which are merely given for the purpose of information.

01-02-2018

| Patent document cited in search report | | Publication date | Patent family member(s) | | Publication date |
|---|---|---|---|---|---|
| US 2013129511 | A1 | 23-05-2013 | JP 2013108391 A | | 06-06-2013 |
| | | | US 2013129511 A1 | | 23-05-2013 |
| EP 3048296 | A1 | 27-07-2016 | CA 2916779 A1 | | 22-07-2016 |
| | | | DE 102015000636 A1 | | 28-07-2016 |
| | | | EP 3048296 A1 | | 27-07-2016 |
| US 2011103953 | A1 | 05-05-2011 | CN 102052264 A | | 11-05-2011 |
| | | | EP 2320073 A2 | | 11-05-2011 |
| | | | US 2011103953 A1 | | 05-05-2011 |
| EP 2884099 | A1 | 17-06-2015 | EP 2884099 A1 | | 17-06-2015 |
| | | | JP 5614765 B2 | | 29-10-2014 |
| | | | JP WO2014024303 A1 | | 21-07-2016 |
| | | | WO 2014024303 A1 | | 13-02-2014 |

EPO FORM P0459